# EUROPEAN PATENT APPLICATION

(11) **EP 1 619 868 A2**
(43) Date of publication of application: **25.01.2006**
(21) Application number: 05014842.8
(22) Date of filing: 08.07.2005
(51) Int. Cl.: H04M 7/00, H04M 3/56

(54) **IP telephone system, ENUM server and method for performing telephone conference**

(30) Priority: 20.07.2004 JP 2004211620
(71) Applicant: MATSUSHITA ELECTRIC INDUSTRIAL CO., LTD., Kadoma-shi, Osaka 571-8501 (JP)
(72) Inventor: Kobayashi, Kazuto, Kawasaki-shi Kanagawa 213-0011 (JP); Miyajima, Akira, Yokohama-shi Kanagawa 222-0023 (JP)
(74) Representative: Grünecker, Kinkeldey, Stockmair & Schwanhäusser Anwaltssozietät

(57) **Abstract**

An IP telephone system includes a plurality of IP telephone apparatuses connected to an IP network, and an ENUM (tElephone NUmber Mapping) server. The ENUM server stores a NAPTR resource record specifying a number which identifies a telephone conference being conducted among these IP telephone apparatuses and specifying identification data for an IP telephone apparatus that attends the telephone conference. The ENUM server also transmits a corresponding NAPTR resource record in response to a query from an IP telephone apparatus. In the IP telephone system, one participating IP telephone apparatus transmits, to the ENUM server, a query for a NAPTR resource record by specifying the number which identify the telephone conference and obtains identification data for another participating IP telephone apparatus according to the received NAPTR resource record.

## Description

### BACKGROUND OF THE INVENTION

### 1. Field of the Invention

The present invention relates to an IP telephone system, an ENUM server and a method for performing a telephone conference that enable voice communication via an IP network.

### 2. Description of Related Art

The recent rapid growth of the Internet has drawn attention to an IP telephone system that enables low-cost voice communications with telephone apparatuses at remote places as well as free voice communications between IP telephone apparatuses owned by subscribers. There has been a request for conducting, for example, a company conference using such an IP telephone system. Such a conference usually involves a plurality of participants.

Recently, ENUM technology has drawn attention due to its ability to effectively manage information used for diversified communications methods including telephones, facsimiles, cellular phones, and e-mails and to enable various communication according to individual circumstances. ENUM is designed to identify the Internet service with a unique global identification number such as the E.164 number, using the DNS (Domain Name System). Currently, the IETF (Internet Engineering Task force) is seeking to standardize ENUM platforms, where protocol specifications are discussed (See Publication 1, for example).
- [Publication 1]: Issued by ENUM Trial Japan "ENUM Trial Japan First Report" May, 2004

However, the above-described system is problematic in that when the user has, for example, a company conference using the IP telephone system, it is necessary to individually provide information such as telephone numbers of other participants. This has been a problem in terms of extra labor required to prepare for a conference.

Particularly, when a number of participants are scheduled to attend a conference, a great amount of labor is required to prepare for a conference.

### SUMMARY OF THE INVENTION

The present invention is provided to address the above-described problems. The purpose of the present invention is to provide an IP telephone system, an ENUM server and a method for performing a telephone conference that reduce labor required to prepare for a telephone conference and ensure smooth conference operation.

The present invention relates to an IP telephone system that includes a plurality of IP telephone apparatuses and an ENUM server. Those IP telephone apparatuses are connected to an IP network. The ENUM server stores a NAPTR resource record specifying a number which identifies a telephone conference being conducted between these IP telephone apparatuses and specifying identification data for an IP telephone apparatus that attends the telephone conference, and transmits a corresponding NAPTR resource record in response to a query from an IP telephone apparatus. In the IP telephone system, the IP telephone apparatus that attends the telephone conference transmits, to the ENUM server, a query for a NAPTR resource record by specifying the number which identifies the telephone conference. The IP telephone apparatus then obtains identification data for another IP telephone apparatus that attends the telephone conference based on the received NAPTR resource record.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 illustrates a network configuration to which an IP telephone system according to an embodiment of the present invention is applied;
Fig. 2 illustrates an example of a NAPTR record corresponding to a conference number stored in a DB of an ENUM server in the IP telephone system according to the embodiment;
Fig. 3 illustrates a functional block diagram for a mixing server in the IP telephone system according to the embodiment;
Fig. 4 illustrates a diagram describing a synthesizing process performed on voice data through a voice synthesizer of the mixing server according to the embodiment;
Fig. 5 illustrates a sequence diagram describing a case where a telephone conference is conducted via an IP network in the IP telephone system according to the embodiment;
Fig. 6 illustrates a flow chart describing an operation of IP telephone A in the Fig. 5 sequence; and
Fig. 7 illustrates a flow chart describing an operation of IP telephone C in the Fig. 5 sequence.

### DETAILED DESCRIPTION OF PREFERRED EMBODIMENTS

The embodiments of the present invention are explained in the following, in reference to the above-described drawings.

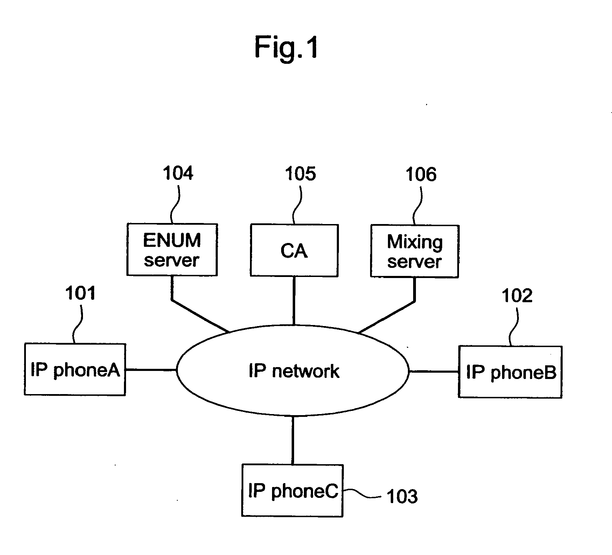

Fig. 1 illustrates a network configuration to which an IP telephone system according to an embodiment of the present invention is applied.

The IP telephone system according to the present embodiment includes a plurality of IP telephone apparatuses (hereafter referred to as "IP phone") A101 - C103 connected to an IP network, ENUM server 104, CA (Call Agent) 105 and mixing server 106. In the figure, three IP phones A101 - C103 are connected to the IP network. The configuration is not limited to this example and may connect four or more IP phones to the IP network.

IP phones A101 - C103 have a function enabling voice communication with another IP telephone apparatus via the IP network. IP phones A101 - C103 also have a function which accesses ENUM server 104 and stores, to ENUM server 104, a NAPTR resource record (hereafter referred to as "NAPTR record)", which is described later. More specifically, they have a function which stores a NAPTR record corresponding to a conference number (described later). It is also possible to provide only a specified IP telephone apparatus with the conference number storage function.

ENUM server 104 is equipped with a database (DB) that stores a NAPTR record. In response to a query (ENUM query) from one of IP phones A101 - C103, ENUM server 104 transmits, to the IP telephone apparatus that has transmitted the query, the NAPTR record stored in the DB.

CA 105 controls voice communication performed between IP telephone apparatuses via the IP network. For example, CA 105 has a function as a SIP (Session Initiation Protocol) server and controls calls between source and destination IP telephone apparatuses.

Mixing server 106 performs a synthesizing process on voice data transmitted when voice communication is performed via the IP network. For example, mixing server 106 synthesizes voice data output from IP phones A101 and B102, adjusts the volume and sound quality, and outputs the data to IP phone C103 when IP phones A101, B102 and C103 perform a three-party call.

In the IP telephone system according to the present embodiment, the DB of ENUM server 104 stores a NAPTR record corresponding to a number (hereafter referred to as "conference number") which identifies a telephone conference being conducted via the IP network. The telephone conference comprises any type of telephone conversation conducted among a plurality of participants, such as, for example, a meeting, a seminar, a convention, or a session, etc. The NAPTR record corresponding to this conference number includes a URI corresponding to an IP telephone apparatus used by a prospective participant. The prospective participant transmits, to ENUM server 104, a query for the NAPTR record corresponding to the conference number and obtains identification data for the prospective participant, which enables the person to take part in the telephone conference.

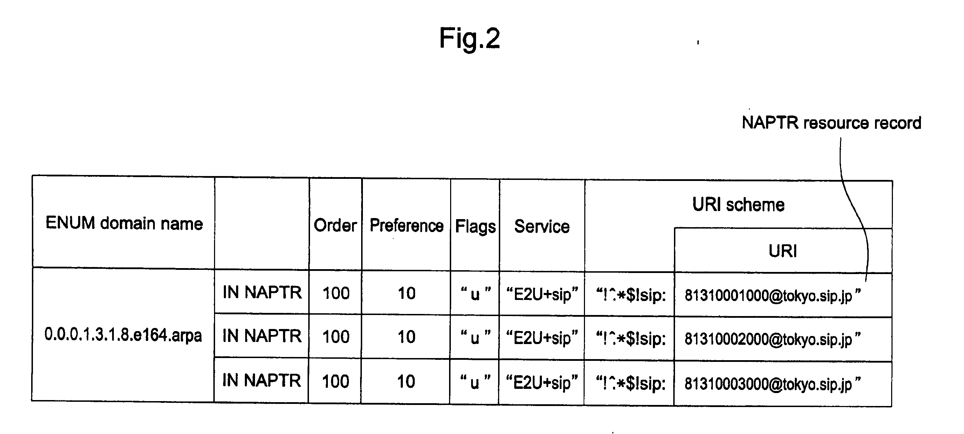

Fig. 2 illustrates an example of a NAPTR record corresponding to a conference number stored in the DB of ENUM server 104 in the IP telephone system according to the present embodiment. The figure shows an example where the DB stores a NAPTR record corresponding to a domain name obtained from conference number "1000".

As shown in Fig. 2, three URIs "81310001000@tokyo.sip.jp", "81310002000@tokyo.sip.jp" and "81310003000@tokyo.sip.jp" correspond to domain name "0.0.0.1.3.1.8.e164.arpa", which is obtained by adding the country code to conference number "1000". In other words, the example shows that there are three prospective participants for the telephone conference identified by conference number "1000". Also, the URIs corresponding to IP telephone apparatuses used by these three participants are stored.

In the present embodiment, a URI stored in a NAPTR record contains a telephone number of a corresponding IP telephone apparatus. More specifically, the telephone number of the IP telephone apparatus is specified before @. In other words, the example shows that "81310001000", "81310002000" and "81310003000" are specified as the telephone numbers.

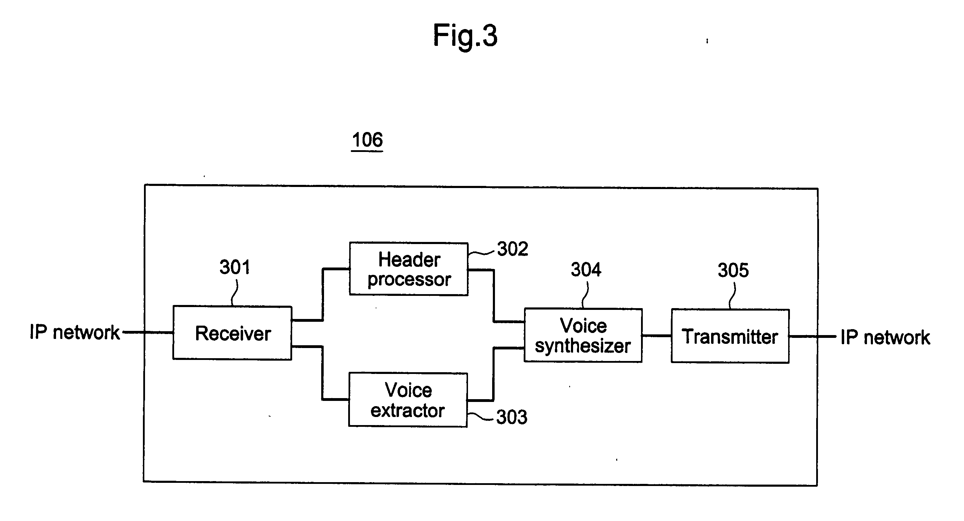

Fig. 3 illustrates a functional block diagram for mixing server 106 in the IP telephone system according to the present embodiment.

Mixing server 106 is configured with receiver 301, header processor 302, voice extractor 303, voice synthesizer 304 and transmitter 305.

Receiver 301 is connected to the IP network and used to receive communication data for a synthesizing process. In this example, an RTP packet is received as communication data according to an RTP (Real-time Transport Protocol). However, the process is not limited to this example. It is also possible to use other communication packets as communication data according to other protocols such as a UDP (User Datagram Protocol).

Header processor 302 interprets data described in the RTP header from the communication data (RTP packet) received by receiver 301 and acknowledges the IP telephone apparatus that has transmitted the RTP packet and the IP telephone apparatus to which the RTP packet has been transmitted. More specifically, header processor 302 acknowledges the telephone numbers of the source and the destination IP telephone apparatuses of the RTP packet by interpreting a port number (input port, output port) described in the RTP header.

Voice extractor 303 extracts voice data from the communication data (RTP packet) received by receiver 301.

Voice synthesizer 304 synthesizes the voice data received from voice extractor 303 according to the port number notified by header processor 302. Voice synthesizer 304 performs a synthesizing process on the voice data when a plurality of voice data are transmitted to a single IP telephone apparatus specified as a destination. In contrast, when voice communication is performed on a one-to-one basis via the IP network, a synthesizing process is not performed on voice data.

Transmitter 305 is connected to the IP network and transmits, to the IP telephone apparatus specified as the destination, an RTP packet on which a synthesizing process is performed. In other words, the RTP packet, on which the voice synthesizing process is performed through voice synthesizer 304, is transmitted to the IP telephone apparatus specified as the destination.

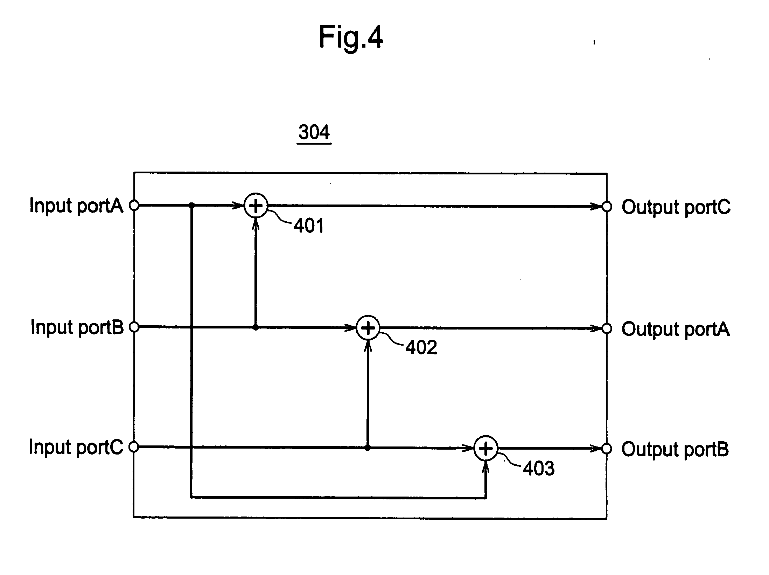

Fig. 4 illustrates a diagram describing a synthesizing process performed on voice data through voice synthesizer 304. This figure illustrates an example where the synthesizing process is performed on voice data transmitted from IP phones A101 - C103 shown in Fig. 1.

In this figure, voice data transmitted from IP phone A101 are input into input port A. Similarly, voice data transmitted from IP phones B102 and C103 are input into input ports B and C respectively. On the other hand, output port A outputs voice data to IP phone A101. Similarly, output ports B and C output voice data to IP phones B102 and C103 respectively.

Voice synthesizer 304 is configured with voice synthesizer units 401 - 403 that synthesize voice data. Voice synthesizer unit 401 synthesizes voice data input into input ports A and B. Voice synthesizer unit 401 is connected to output port C. Accordingly, the voice data synthesized by voice synthesizer unit 401 are transmitted from output port C to IP phone C103.

Similarly, voice synthesizer unit 402 synthesizes voice data input into input ports B and C and is connected to output port A. Accordingly, the voice data synthesized by voice synthesizer unit 402 is transmitted from output port A to IP phone A101.

Similarly, voice synthesizer unit 403 synthesizes voice data input into input ports A and C and is connected to output port B. Accordingly, the voice data synthesized by voice synthesizer unit 403 is transmitted from output port B to IP phone B102.

The following describes a sequence for conducting a telephone conference via the IP network in the IP telephone system having the above-described configuration.

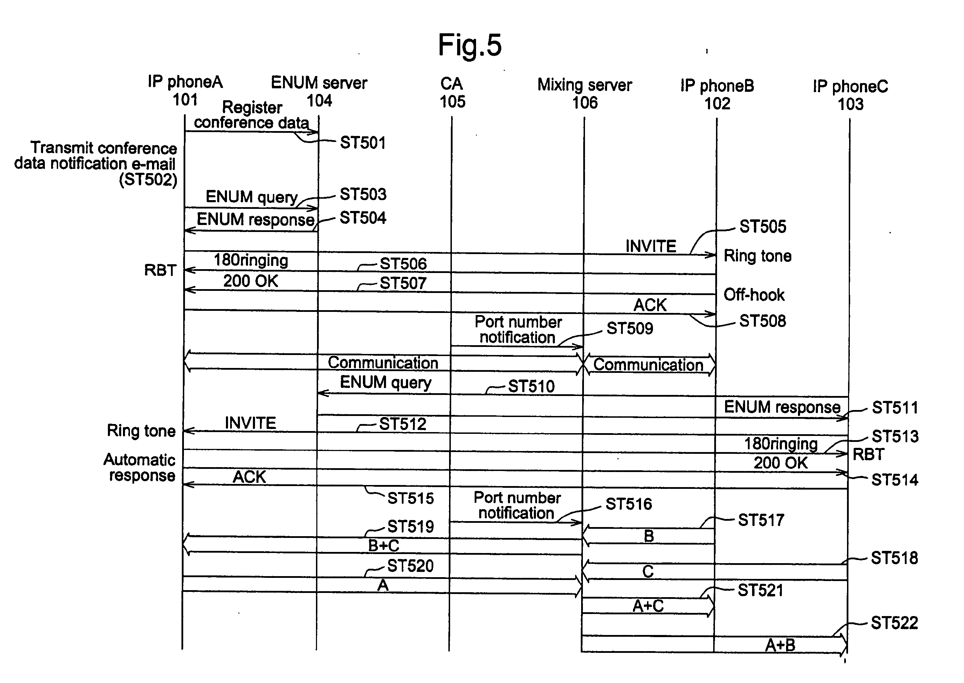

Fig. 5 illustrates a sequence diagram describing an example where the telephone conference is conducted via the IP network in the IP telephone system according to the present embodiment. This figure shows an example where three IP phones A101 - C103 have a three-party telephone conference via the IP network.

URIs "81310001000@tokyo.sip.jp", "81310002000@tokyo.sip.jp" and "81310003000@tokyo.sip.jp" are assigned to IP phones A101, B102 and C103 respectively. In other words, telephone numbers "81310001000", "81310002000" and "81310003000" are assigned to IP phones A101, B102 and C103 respectively.

When the telephone conference is conducted via the IP network, CA 105 controls voice communication performed via the IP network. CA 105 needs to register data for each IP telephone apparatus in order to perform a call control between IP telephone apparatuses. Prior to proceeding to the Fig. 5 sequence, for example, each IP telephone apparatus transmits the "Register" message to CA 105, after which CA 105 responds by transmitting the "200 OK" message to each IP telephone apparatus. Through these processes, CA 105 registers data for each IP telephone apparatus beforehand.

In the IP telephone system according to the present embodiment, a person in charge of the telephone conference or a person who coordinates the telephone conference (hereafter referred to as "coordinator" for sake of convenience) needs to specify the conference number and to store, in the DB of ENUM server 104, the NAPTR record corresponding to the conference number. The coordinator also needs to notify prospective participants of conference data such as the conference number and the starting and ending time. Any form, such as telephones, faxes or e-mails, may be used to communicate conference data. The following describes an example where emails are used to communicate conference data. In the following case, the user of IP phone A101 is the coordinator. The IP phone A101 user is referred to as "user A", and the users of IP phones B102 and C103 are referred to as "user B" and "user C" respectively.

When the telephone conference is conducted via the IP network, the coordinator first stores conference data on ENUM server 104 (ST 501). Through this storing process, the conference number as well as prospective participants are specified as conference data. In this example, the DB of ENUM server 104 stores the NAPTR record shown in Fig. 2. More specifically, conference number "1000" is specified and the users of IP phones A101 - C103 are specified as the prospective participants.

When the process of storing the conference data on ENUM server 104 is completed, the coordinator transmits, to the prospective participants, an e-mail message for communicating the conference data (hereafter referred to as "conference data notification email") (ST 502). The conference data notification email contains the conference number, the starting time, and the ending time. The content is not limited to this example and may include other data.

When the telephone conference is due to begin, the coordinator inputs conference number "1000" through the numerical keys of IP phone A101. The coordinator then instructs IP phone A101 to transmit, to ENUM server 104, an ENUM query for a NAPTR record corresponding to the conference number.

After receiving the conference number and then the instruction for transmitting the ENUM query, IP phone A101 transmits the ENUM query to ENUM server 104 (ST 503). In this example, IP phone A101 first converts the coordinator's input number "1000" into the E.164 number "+81 - 3 - 1000" including the country code. Then, "+8131000" is obtained by maintaining + at the beginning and the numbers. Next, non numerical symbols are deleted, and dots are inserted between the numbers, resulting in "8.1.3.1.0.0.0". Then, the numbers are reversed, and data string ".e164.arpa" is added at the end. As a result, domain name "0.0.0.1.3.1.8.e164.arpa" is obtained. IP phone A 101 then transmits the ENUM query for a NAPTR record corresponding to the domain name.

Upon receiving the ENUM query, ENUM server 104 searches for a NAPTR record corresponding to domain name "0.0.0.1.3.1.8.e164.arpa". ENUM server 104 then transmits, to IP phone A101, an ENUM response including the corresponding NAPTR record (ST 504). In this example, ENUM server 104 transmits, to IP phone A101, the ENUM response including the NAPTR record shown in Fig. 2. When the ENUM response is transmitted to IP phone A101, the coordinator confirms that users B and C are the prospective participants for the telephone conference specified by conference number "1000" as well as the telephone numbers of IP phones B102 and C103.

Upon confirming the telephone numbers of the prospective participants, the coordinator transmits, to IP phone A101, an instruction to call one of these telephone numbers. In response to this call instruction, IP phone A101 transmits, to a selected telephone number, the "INVITE" message via CA 105 (ST 505). In this example, the instruction was made to call IP phone B102.

This example illustrates a case where a call is made to one of these telephone numbers after the coordinator makes the call instruction. However, the process is not limited to this example. It is also possible to make an automatic call to the top telephone number except the telephone number of the source telephone apparatus.

Upon receiving the "INVITE" message, IP phone B102 sounds a ring tone. At the same time, IP phone B102 transmits, to IP phone A101, the "180 Ringing" message via CA 105 (ST 506). IP phone A101 sounds a ring back tone (hereafter referred to as "RBT") in response to the "180 Ringing" message.

When an off-hook operation or other response is detected at IP phone B102 in response to the ring tone, IP phone B102 transmits, to IP phone A101, the "200 OK" message indicating a connection approval via CA 105 (ST 507). Upon receiving the "200 OK" message, IP phone A101 transmits the "ACK" message to IP phone B102 (ST 508).

IP phones A and B obtain the IP address and the input/output port number of mixing server 106 which relays voice data in the sequence starting with the "INVITE" message transmission and ending with the "ACK" message transmission. Upon detecting the "ACK" message, CA 105 notifies mixing server 106 of the port number (input port and output port) used for voice data communication and the IP addresses of IP phones A and B (ST 509). The port number is used for voice synthesizer 304 to synthesize voice data. After mixing server 106 is notified of the port number, communication becomes possible between IP phones A101 and B102 via mixing server 106. At this time, voice synthesizer 304 does not perform a synthesizing process, since voice communication is performed on a one-to-one basis.

In the present embodiment, a case is explained wherein user C joins the telephone conference later while IP phones A101 and B102 are performing voice communication. In order to join the telephone conference later, user C inputs the previously received conference number "1000" through the numerical keys of IP phone C103 and instructs IP phone C103 to transmit an ENUM query for a NAPTR record corresponding to the conference number.

After receiving the conference number and then the instruction for transmitting the ENUM query, IP phone C103 transmits the ENUM query to ENUM server 104 (ST 510). Upon receiving the ENUM query, ENUM server 104 searches for a NAPTR record corresponding to the ENUM query and transmits, to IP phone C103, an ENUM response including the NAPTR record (ST 511). The processes performed by IP phone C103 and by ENUM server 104 are the same as those performed by IP phone A101 in the above-noted ST 503 and ST 504, and their descriptions are therefore omitted.

When IP phone C103 receives the ENUM response from ENUM server 104, user C confirms the telephone numbers of IP phones A101 and B102. In the IP telephone system according to the present embodiment, a participant seeking to join the telephone conference later calls the coordinator for sake of expediency.

In this example, the participant who joins the telephone conference later calls the coordinator. However, the process is not limited to this example. It is also possible for the participant to call a user other than the coordinator and to be allowed to join the telephone conference later.

Upon confirming the telephone number of the coordinator's IP phone A101, user C instructs IP phone C103 to call the telephone number. In response to the call instruction, IP phone C103 transmits, to IP phone A101, the "INVITE" message via CA 105 (ST 512).

Upon receiving the "INVITE" message, IP phone A101 sounds a ring tone. At this time, IP phone A101 is communicating with IP phone B102, and the ring tone is thus added to the voice during the communication. At the same time, IP phone A101 transmits the "180 Ringing" message to IP phone C103 via CA 105 (ST 513). IP phone C103 sounds an RBT in response to the "180 Ringing" message.

When the "INVITE" message is received during the communication with another IP telephone apparatus, IP phone A101 is set to automatically respond to the ring tone. After the automatic response is made, IP phone A101 transmits, to IP phone C103, the "200 OK" message indicating a connection approval via CA 105 (ST 514). Upon receiving the "200 OK" message, IP phone C103 transmits the "ACK" message to IP phone A101 (ST 515).

The example shows a case where IP phone A101 automatically responds to the "INVITE" message. However, the process is not limited to this example. It is also possible to have IP phone A101 respond in response to a coordinator's instruction. In this case, the coordinator can determine when letting the delayed participant join the telephone conference. This enables the person to join the telephone conference late without interrupting the telephone conference.

In the above-described sequence, every terminal obtains the IP address and the input/output port number of mixing server 106 which relays voice data. Upon detecting the "ACK" message, CA 105 notifies mixing server 106 of the port number (input/output port) used for voice data communication in the same manner as ST 509 (ST 516). After mixing server 106 is notified of the port number, communication becomes possible among the three parties, IP phones A101, B102 and C103, via mixing server 106.

In other words, voice data output from IP phone B102 (ST 517 : [B]) and voice data output from IP phone C103 (ST 518 : [C]) are output to IP phone A101 as voice data synthesized by mixing server 106 (ST 519 : [B+C]). Voice data output from IP phone C103 (ST 518 : [C]) and voice data output from IP phone A101 (ST 520 : [A]) are output to IP phone B102 as voice data synthesized by mixing server 106 (ST 521 : [A+C]). Further, the voice data output from IP phone B102 (ST 517 : [B]) and the voice data output from IP phone A101 (ST 520 : [A]) are output to IP phone C103 as voice data synthesized by mixing server 106 (ST 522 : [A+B]). Through these processes, communication is performed among the three parties, IP phones A101, B102 and C103. The three party communication enables a telephone conference among users A, B and C.

The following describes the operations performed between IP phones A101 and C103 in the Fig. 5 sequence. The description of the operation of IP phone B102 in the Fig. 5 sequence is omitted.

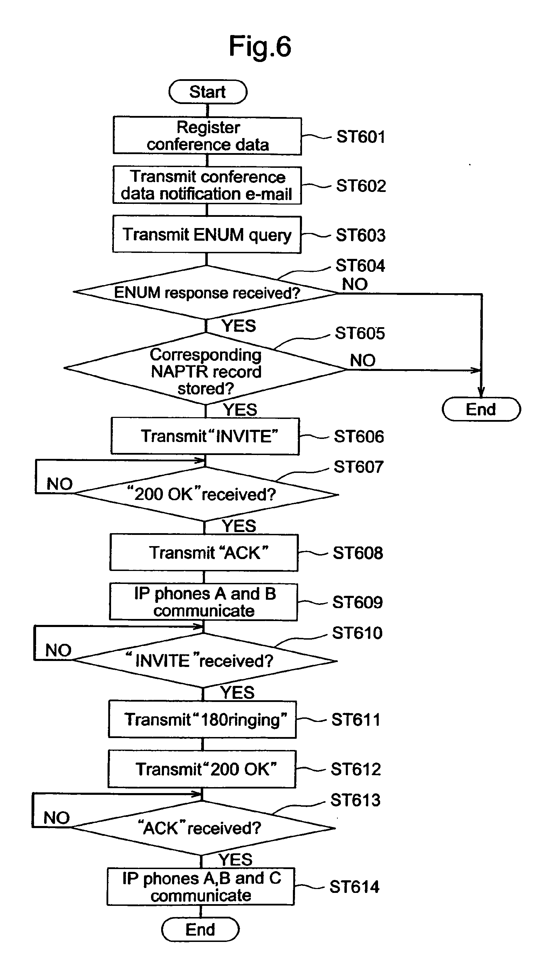

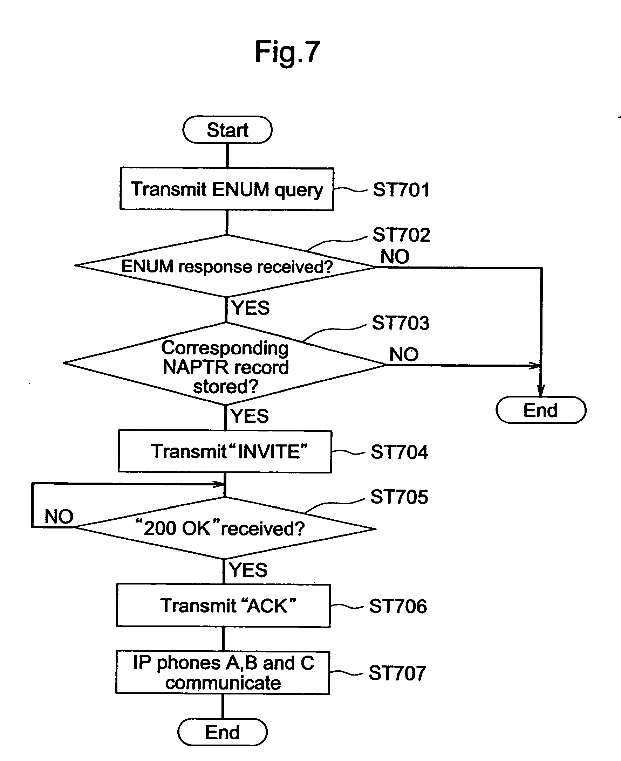

Fig. 6 illustrates a flow chart describing the operation of IP phone A101 in the Fig. 5 sequence. Fig. 7 illustrates a flow chart describing the operation of IP phone C103 in the Fig. 5 sequence.

When the operation is performed according to the Fig. 5 sequence, IP phone A101 first stores conference data on ENUM server 104 according to a coordinator's instruction (ST 601). After completing the process for storing the conference data, IP phone A101 transmits a conference data notification email to a prospective participant (ST 602). In this case, the conference data notification email is transmitted to uses B and C.

When the telephone conference is due to begin, IP phone A101 transmits, to ENUM server 104, an ENUM query according to the coordinator's instruction (ST 603), after which IP phone A101 waits for reception of an ENUM response (ST 604). When the ENUM response is received, it is determined whether a NAPTR record corresponding to the ENUM query is included in the ENUM response (ST 605). When no corresponding NAPTR record is included and no ENUM response is received in ST 604, IP phone A101 determines that the communication was unsuccessful and terminates the process.

When the NAPTR record corresponding to the ENUM query is included in the ENUM response, IP phone A101 places a call to the telephone number of another IP telephone apparatus according to the coordinator's instruction. At this time, IP phone A101 transmits the "INVITE" message to another IP telephone apparatus (ST 606). In this case, the "INVITE" message is transmitted to IP phone B102.

After transmitting the "INVITE" message, IP phone A101 determines whether to receive the "200 OK" message (ST 607). When the "200 OK" message is received, IP phone A101 transmits the "ACK" message (ST 608). IP phone A101 continues to monitor for reception of the "200 OK" message until it is received.

After IP phone A101 transmits the "ACK" message, CA 105 notifies mixing server 106 of the port number, after which communication becomes possible between IP phones A101 and B102. Communication starts between IP phones A101 and B102 by exchanging voice data (ST 609). Such voice data exchange in the communication process is performed via mixing server 106.

While communicating with IP phone B102, IP phone A101 monitors for reception of the "INVITE" message from another IP telephone apparatus (ST 610). When the "INVITE" message is received from another IP telephone apparatus, IP phone A101 adds a ring tone to the voice during the communication. IP phone A101 also transmits, to the IP telephone that has transmitted the "INVITE" message, the "180 Ringing" message (ST 611). In this case, IP phone A101 receives the "INVITE" message from IP phone C103 and transmits the "180 Ringing" message to IP phone C103.

When IP phone A101 receives the "INVITE" message while communicating with another IP telephone apparatus, IP phone A101 automatically responds to a ring tone, which sounds in response to the "INVITE" message. After making the automatic response, IP phone A101 transmits the "200 OK" message via CA 105 (ST 612). In this case, IP phone A101 transmits the "200 OK" message to IP phone C103.

After transmitting the "200 OK" message, IP phone A101 determines whether the "ACK" message is received (ST 613). When the "ACK" message" is received, voice communication becomes possible among IP phones A101, B102 and C103 after CA 105 notifies mixing server 106 of the port number. The three-party communication starts among IP phones A101, B102 and C103 by exchanging voice data (ST 614). IP phone A101 continues to monitor for reception of the "ACK" message until it is received.

The voice data exchange in the three-party communication process is performed by mixing server 106 through a synthesizing process. In other words, voice data output from IP phones B102 and C103 are output to IP phone A101 as synthesized voice data. In addition, voice data output from IP phones C103 and A101 are output to IP phone B102 as synthesized voice data. Further, voice data output from IP phones B102 and A101 are output to IP phone C103 as synthesized voice data.

As described above, the telephone conference is conducted in the form of a three-party call among users A, B and C. To end the telephone conference, each user performs a terminating process. The telephone conference concludes through the terminating process.

On the other hand, when performing operations according to the Fig. 5 sequence, IP phone C103 first transmits an ENUM query to ENUM server 104 (ST 701). After that, IP phone C103 waits for an ENUM response (ST 702). When the ENUM response is received, it is determined whether a NAPTR record corresponding to the ENUM query is included in the ENUM response (ST 703). On the other hand, when no corresponding NAPTR is included and no ENUM response is received in ST 702, IP phone C103 determines that the communication was unsuccessful and terminates the process.

When the NAPTR record corresponding to the ENUM query is included in the ENUM response, IP phone C103 places a call to the coordinator's IP telephone apparatus according to an instruction from user C. At this time, IP phone C103 transmits the "INVITE" message to the coordinator's IP telephone apparatus (ST 704). In this case, IP phone C103 transmits the "INVITE" message to IP phone A101.

After transmitting the "INVITE" message, IP phone C103 determines whether the "200 OK" message is received (ST 705). When the "200 OK" message is received, IP phone C103 transmits the "ACK" message (ST 706). IP phone C103 continues to monitor for reception of the "200 OK" message until it is received.

After transmitting the "ACK" message, voice communication starts among IP phones A101, B 102 and C103 after CA 105 notifies mixing server 106 of the port number (ST 707). Such voice data exchange in the communication process is performed by mixing server 106 through a synthesizing process. The voice data synthesizing process is performed in the same manner as ST 614 shown in Fig. 6, and its description is therefore omitted.

As described above, the telephone conference is conducted by the three-party call among users A, B and C. To end the telephone conference, each user performs a terminating process. The telephone conference concludes through the terminating process.

As described above, in the IP telephone system according to the present embodiment, an IP telephone apparatus that attends a telephone conference transmits, to ENUM server 104, a query for a NAPTR record by specifying a conference number. According to the received NAPTR record, the IP telephone apparatus then obtains identification data for another IP telephone apparatus that is scheduled to attend the telephone conference. This process eliminates the need to individually provide data including another participant's telephone number. As a result, using the IP telephone system reduces labor required to prepare for the telephone conference, thus making it possible to conduct the telephone conference smoothly.

Particularly, in the IP telephone system according to the present embodiment, the DB of ENUM server 104 stores a NAPTR record specifying, in a URI, the telephone number of an IP telephone apparatus. Therefore, an IP telephone apparatus that is scheduled to attend the telephone conference can obtain the telephone number of another IP telephone apparatus that is scheduled to attend the telephone conference. Then, the IP telephone apparatus is able to place a call to another participating IP telephone apparatus using the obtained telephone number.

In the IP telephone system according to the present embodiment, mixing server 106 performs a synthesizing process on communication data output from an IP telephone apparatus. Therefore, it is possible to have a real-time telephone conference among three or more IP telephone apparatuses.

Particularly, in the IP telephone system according to the present embodiment, mixing server 106 performs a synthesizing process on voice data output from an IP telephone apparatus. Therefore, it is possible to have a real-time telephone conference among three or more IP telephone apparatuses.

Further, in the IP telephone system according to the present embodiment, a case is explained wherein mixing server 106 performs a synthesizing process on voice data output from an IP telephone apparatus. However, the process is not limited to this case. It is also possible to have the IP telephone apparatus output image/visual data and to have mixing server 106 perform the synthesizing process on the voice data as well as the image/visual data. In this case, it is possible to have a real-time telephone conference among three or more IP telephone apparatuses, using the voice data as well as the image/visual data.

In the IP telephone system according to the present embodiment, a case is explained wherein a three-party telephone conference is conducted by the coordinator placing a call to the telephone number of IP phone B102. Communication then starts between IP phones A101 and B102, after which user C joins the telephone conference, performing a three-party telephone conference. However, the process is not limited to this example. It is also possible for the coordinator to call the telephone numbers of IP phone B102 and IP phone C103 in this order and to conduct a telephone conference among the three parties after communication becomes possible among users A, B and C. In this case, all participants can speak in the telephone conference from the beginning, and thus more efficient conference operation becomes possible.

Further, in the above description, the IP telephone apparatus according to the present invention performs under a SIP as a VolP protocol. However, the process is not limited to this case. In other words, the configuration may apply to an IP telephone apparatus that performs under H.323 or MGCP (Media Gateway Control Protocol) as the VoIP protocol.

The IP telephone described above includes an IP telephone apparatus defined by the government and operated by a telecommunications provider. It also includes an IP telephone provided on a local network or a private network using TCP/IP or other computer network protocols.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

This application is based on the Japanese Patent Application No. 2004 - 211620 filed on July 20, 2004 entire content of which is expressly incorporated by reference herein.

## Claims

1. An IP telephone system comprising:
a plurality of IP telephone apparatuses; and
an ENUM server configured to store a NAPTR (Naming Authority Pointer) resource record, the NAPTR resource record including an ENUM domain name corresponding to a plurality of URIs, the ENUM domain name being associated with a predetermined number indicating a telephone conference, the telephone conference being performed between the plurality of the IP telephone apparatuses, the plurality of the URIs being associated with a plurality of telephone numbers, the plurality of the telephone numbers corresponding to the plurality of the IP telephone apparatuses,
one of the plurality of the IP telephone apparatuses being further configured to:
input the predetermined number indicating the telephone conference;
transmit, to the ENUM server, a request for transmitting, to the one of the plurality of the IP telephone apparatuses, the NAPTR resource record corresponding to the input predetermined number;
receive, from the ENUM server, the corresponding NAPTR resource record;
obtain telephone numbers of at least two IP telephone apparatuses from the plurality of the URIs included in the received NAPTR resource record; and
access at least one of the at least two IP telephone apparatuses for the telephone conference via the internet, based on one of the obtained telephone numbers.

2. The IP telephone system according to claim 1, wherein each of the plurality of URIs includes one of the plurality of the telephone numbers.

3. The IP telephone system according to claim 1 further comprises a mixing server configured to perform mixing of communication data output from the plurality of the IP telephone apparatuses.

4. The IP telephone system according to claim 3, wherein the communication data comprises voice data.

5. The IP telephone system according to claim 3, wherein the communication data comprises voice data and image data.

6. An ENUM server connected to a plurality of IP telephone apparatuses comprising:
a memory configured to store a NAPTR (Naming Authority Pointer) resource record, the NAPTR resource record including an ENUM domain name corresponding to a plurality of URIs, the ENUM domain name being associated with a predetermined number indicating a telephone conference, the telephone conference being performed between the plurality of the IP telephone apparatuses, the plurality of the URIs being associated with a plurality of telephone numbers, the plurality of the telephone numbers corresponding to the plurality of the IP telephone apparatuses; and
a controller configured to receive, from one of the plurality of the IP telephone apparatuses, a request for transmitting, to the one of the plurality of the IP telephone apparatuses, the NAPTR resource record corresponding to the predetermined number, and to transmit, to the one of the plurality of the IP telephone apparatuses, the corresponding NAPTR resource record.

7. A method for performing a telephone conference using a plurality of IP telephone apparatuses connected to an ENUM server, the ENUM server storing a NAPTR (Naming Authority Pointer) resource record, the NAPTR resource record including an ENUM domain name corresponding to a plurality of URIs, the ENUM domain name being associated with a predetermined number indicating a telephone conference, the telephone conference being performed between the plurality of the IP telephone apparatuses, the plurality of the URIs being associated with a plurality of telephone numbers, the plurality of the telephones corresponding to the plurality of the IP telephone apparatuses, the method comprising:
inputting the predetermined number indicating the telephone conference;
transmitting, to the ENUM server, a request for transmitting, to the one of the plurality of the IP telephone apparatuses, the NAPTR resource record corresponding to the input predetermined number;
receiving, from the ENUM server, the corresponding NAPTR resource record;
obtaining telephone numbers of at least two IP telephone apparatuses from the plurality of the URIs included in the received NAPTR resource record; and
accessing at least one of the at least two IP telephone apparatuses for the telephone conference via the internet, based on the obtained telephone numbers.

8. The method according to claim 7, wherein each of the plurality of URIs includes one of the plurality of the telephone numbers.
